# EUROPÄISCHE PATENTANMELDUNG

(11) **EP 1 283 502 A1**
(43) Veröffentlichungstag der Anmeldung: **12.02.2003**
(21) Anmeldenummer: 02021037.3
(22) Anmeldetag: 19.07.1996
(51) Int. Cl.: G07C 9/00, G06F 1/00

(54) **System zur elektronischen Datenverarbeitung**

(30) Priorität: 21.07.1995 AT 124695
(62) Teilanmeldung aus: 96927561.9
(71) Anmelder: Siemens AG Österreich, 1210 Wien (AT)
(72) Erfinder: Forer, Josef, 1060 Wien (AT); Kauf, Otto, 1230 Wien (AT)
(74) Vertreter: Berg, Peter, Dipl.-Ing.

(57) **Zusammenfassung**

Es wird ein System zur elektronischen Datenverarbeitung angegeben, welches zumindest eine zentrale Steuereinheit, eine Speichereinheit, eine Bedieneinheit und Mittel zur Stromversorgung umfasst, wobei die Bedieneinheit Mittel zur Erfassung charakteristischer Merkmale von Personen umfasst, und wobei Mittel zum Vergleich der erfassten Merkmale mit gespeicherten Mustern vorgesehen sind.

## Beschreibung

Die Erfindung betrifft ein System zur elektronischen Datenverarbeitung, mit zumindest einer zentralen Steuereinheit, einer Speichereinheit, einer Bedieneinheit und Mittel zur Stromversorgung, wobei die Bedieneinheit Mittel zur Erfassung charakteristischer Merkmale von Personen umfaßt, und wobei Mittel zum Vergleich der erfaßten Merkmale mit gespeicherten Mustern vorgesehen sind.

Systeme zur elektronischen Datenverarbeitung finden heutzutage in nahezu allen Bereichen des Wirtschaftslebens Anwendung. Besonders bedeutsam sind darunter die sogenannten Personalcomputer mit ihren Einsatzmöglichkeiten als Textverarbeitungsmaschinen, für Buchhaltungsaufgaben oder zur Datenverwaltung und -verarbeitung.

Da in zunehmendem Maße mit den Personalcomputern auch vertrauliche Daten verarbeitet werden, ist es dabei wünschenswert, die Nutzung der Geräte auf einen bestimmten Personenkreis zu beschränken. Dies geschieht bei handelsüblichen Personalcomputern entweder dadurch, daß nach dem Einschalten des Gerätes der Benutzer aufgefordert wird, eine Kennung - die nur dem bestimmten Personenkreis bekannt ist - einzugeben, oder durch Versperren der Geräte in geeigneten Räumlichkeiten und Kontrolle des Zuganges.

Dabei ist es allerdings nicht möglich festzustellen, ob die Nutzung tatsächlich durch eine der dazu befugten Personen erfolgt ist, oder ob etwa durch Weitergabe der Kennung oder eines Schlüssels - gewollt oder nicht gewollt - auch dazu nicht Berechtigte Zugriff auf das Gerät erlangen konnten. Es sind darüberhinaus Verfahren und Hilfsmittel bekannt, wie Kennungen ermittelt und damit umgangen werden können.

Verstärkt wird die Problematik auch durch den zunehmenden Einsatz von tragbaren Personalcomputern, den sogenannten Notebooks.

Zunehmende Bedeutung gewinnt diese Problematik auch bei hochwertigen Geräten der Konsumelektronik, wie z.B. Fernsehapparaten oder Spielen, welche in verstärktem Maße obgenannte Systeme zur elektronischen Datenverarbeitung beinhalten und beispielsweise gebührenpflichtige Fernsehprogramme empfangen oder über Datennetze mit anderen Geräten kommunizieren können.

Besonders problematisch ist die Frage der Zugriffsberechtigung und -kontrolle naturgemäß bei Systemen zur elektronischen Datenverarbeitung, die zur Abwicklung von Geldgeschäften eingesetzt werden, insbesondere bei den Geldausgabeautomaten, wobei unter "Geldausgabe" beispielsweise auch Buchungsvorgänge auf eine elektronische Scheckkarte, d.h. das Aufladen einer elektronischen Geldbörse verstanden werden kann.

Hier wird die Zugriffssicherheit dadurch erhöht, daß der Bediener (Kunde) neben seiner Kennung auch noch die dazugehörige Magnetkarte oder Chipkarte vorweisen muß. Durch diese Kombination zweier Verfahren wird die Zugriffssicherheit erhöht, gleichzeitig aber auch der Komfort für den Bediener verringert, die Fehlerhäufigkeit bei den Bedienvorgängen erhöht und der Vorgang der Zugriffskontrolle verlängert, was in Hauptgeschäftszeiten zu erheblichen Wartezeiten bei der Geldausgabe führt.

Dieselbe Problematik wie bei der Nutzungs- und Zugriffsberechtigung besteht bei vernetzten Systemen zur elektronischen Datenverarbeitung beim elektronischen Schriftverkehr, beispielsweise per Email. Um zu gewährleisten, daß ein bestimmtes elektronisches Schriftstück auch tatsächlich den Willen einer bestimmten Person repräsentiert, ist eine weitgehend fälschungssichere elektronische Unterschrift, bzw. ein entsprechendes Berechtigungsverfahren notwendig.

Aus der BE 1 006 954 ist ein System bekannt, bei dem zur eindeutigen Identifizierung von Personen die Fingerabdrücke erfaßt und mit gespeicherten Mustern verglichen werden.

Durch die Erfassung charakteristischer personenbezogener Merkmale kann die mißbräuchliche Nutzung der Systeme mit hoher Wahrscheinlichkeit ausgeschlossen werden und ein Versperren der Geräte in geeigneten Räumlichkeiten ist nicht notwendig. Geeignete personenbezogene Merkmale sind beispielsweise das Muster der Blutbahnen der Netzhaut, die Struktur der Iris, die Länge und Form der Finger, das Gesicht, die Stimme oder aber Fingerabdrücke. Die Möglichkeiten, Personen aufgrund dieser Merkmale zu identifizieren, sind beispielsweise in IEEE Spectrum, Februar 1994, "It had to be you" beschrieben. Die wahrscheinlich am besten erforschten und damit zuverlässigsten Merkmale sind dabei die Fingerabdrücke. Diese sind auch in für den Benutzer komfortabler Weise zu ermitteln, während z.B. das Muster der Netzhaut nur durch eine für den zu Identifizierenden unangenehme Prozedur erfaßt werden kann.

Der Erfindung liegt die Aufgabe zugrunde, das in der BE 1 006 954 beschriebene Systeme hinsichtlich der Zugriffsicherheit und des Benutzerkomforts weiter zu verbessern.

Dies geschieht erfindungsgemäß mit einem System zur elektronischen Datenverarbeitung der eingangs genannten Art, bei dem als charakteristisches Merkmal mehrere Fingerabdrücke der zu überprüfenden Person in festgelegter Reihenfolge erfaßt und mit gespeicherten Mustern verglichen werden.

Durch die Erfassung mehrerer Fingerabdrücke kann mit geringem technischen Aufwand die Erkennungssicherheit erhöht werden, beziehungsweise bei einer bestimmten geforderten Erkennungssicherheit der dazu notwendige technische Aufwand reduziert werden. Darüberhinaus können die Fingerabdrücke auch zur Bedienung des Gerätes herangezogen werden, indem den einzelnen Fingern oder Kombinationen davon bestimmte Funktionen zugeordnet werden.

Vorteilhaft ist es, wenn eine Einrichtung zur Ausgabe von Geldscheinen und/oder Münzen und/oder elektronischen Wertdaten vorgesehen ist.

Damit können auch Geldausgabeautomaten oder Chipkartenterminals realisiert werden.

Vorteilhaft ist der Einsatz der Erfindung auch bei tragbaren Personalcomputern und Geräten der Konsumelektronik wie Fernsehapparaten oder Computerspielgeräten. Damit kann unter anderem der kostenpflichtige Zugang zu derartigen Geräten in Hotels geregelt werden. Grundsätzlich ist die Erfindung natürlich bei allen per Datenverarbeitung erfaßbaren Leistungen einsetzbar. So kann beispielsweise auch die Rechnung in einem Hotelrestaurant per Fingerabdruck verbucht werden.

Die Erfindung wird anhand zweier Figuren näher erläutert. Es zeigen beispielhaft:
Fig. 1 einen erfindungsgemäßen Personalcomputer mit Zugriffskontrolle und
Fig. 2 den Einsatz der Erfindung bei einem tragbaren Personalcomputer.

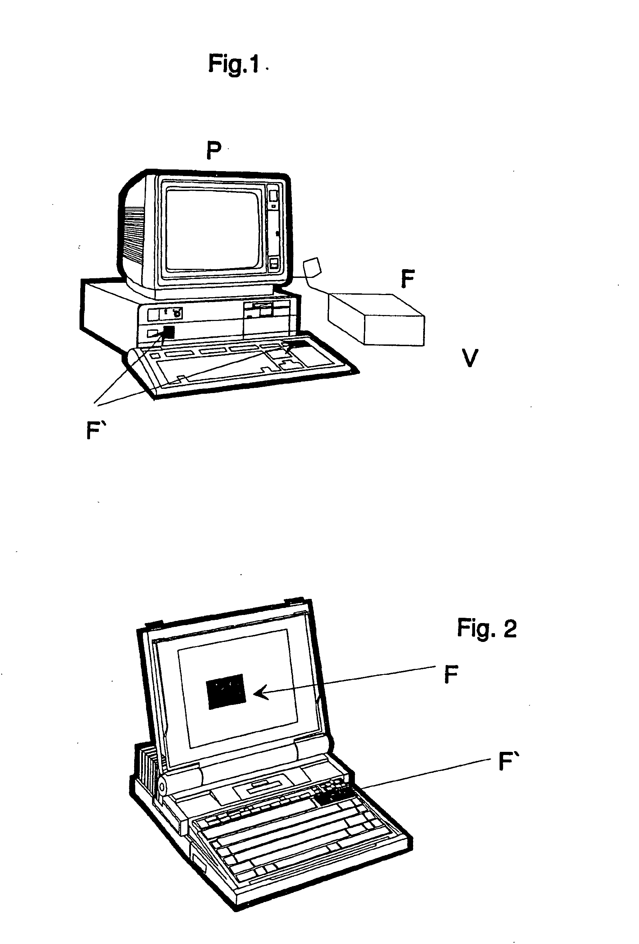

Das System nach Fig.1 umfaßt einen Personalcomputer P sowie ein Zugriffssteuerungsgerät V mit unabhängiger Stromversorgung, welches Mittel zur Erfassung von Fingerabdrücken und Mittel zum Vergleich der erfaßten Merkmale mit gespeicherten Mustern umfaßt.
Eine mögliche Ausgestaltung dieser Mittel ist beispielsweise in der EPA 0 040 838 beschrieben.

Die Bedienung des Systems ist wie folgt: In einem ersten Schritt ist das Zugriffssteuerungsgerät V durch Einschalten der unabhängigen Stromversorgung zu aktivieren. Danach hat der Benutzer den zur Kontrolle ausgewählten Finger auf eine Abtastfläche F zu drücken. Der entstandene Fingerabdruck wird optisch abgetastet, das Bild wird digitalisiert und analysiert. Dabei werden die Bilddaten von beispielsweise 250 KByte auf ein mathematisches Charakteristikum von etwa 1 KByte reduziert. Dieses wird mit den gespeicherten Charakteristika verglichen und eine Entscheidung getroffen, ob eine Zugriffsberechtigung vorliegt. Eine detaillierte Beschreibung dieses Ablaufes findet sich beispielsweise auch in MAISEL, W.: Zugangs und Zugriffskontrollsysteme auf der Basis Biometrischer Systeme. DATASAFE, 2. internationale Fachmesse und Kongreß für Datensicherheit, MESAGO, D, 26. Bis 28. November 1991, pp.93-101.

Für die Erkennungssicherheit ist nun die Qualität des mathematischen Charakteristikums maßgeblich. Hohe Anforderungen an die Erkennungssicherheit können aber mit verhältnismäßig einfachen Mitteln auch dadurch erfüllt werden, daß mehrere Finger in einer nur dem Benutzer bekannten oder vom Benutzer festgelegten Reihenfolge erfaßt werden.

Ist dies der Fall, wird die Stromversorgung des Personalcomputers eingeschaltet und der berechtigte Benutzer kann in herkömmlicher Weise mit der weiteren Bedienung des Personalcomputers fortfahren.

Das Zugriffsteuerungsgerät V kann dabei auch in das Gehäuse des Personalcomputers und die Abtastfläche in eine Taste der Bedieneinheit F', beispielsweise eine POWER-ON/OFF-Taste integriert sein. Damit werden Kontroll- und Einschaltvorgang durch das Drücken dieser Taste ausgelöst. Durch die Zuordnung von benutzerindividuellen Einstellungen zu den gespeicherten Mustern gelangt der Benutzer automatisch in eine bevorzugte Einstellung, z.B. in ein bestimmtes Programm.

In gleicher Weise ist es bei Anwendung der Erfindung bei Geräten der Konsumelektronik vorteilhaft, Zugriffsteuerungsgerät V und Abtastfläche F' in die entsprechende Bedieneinheit, beispielsweise die Fernbedienung eines Fernsehapparates zu integrieren.

Zur Beschleunigung des Vergleichsvorganges ist es auch möglich, daß der Benutzer über eine entsprechende Tastatur des Zugriffssteuerungsgerätes V eine individuelle Kennung eingibt, sodaß nur ein Vergleich des Charakteristikums mit einem einzelnen gespeicherten Wert notwendig ist.

Bei einem tragbaren Personalcomputer (Notebook) wie in Fig. 2 dargestellt, wäre ein
zusätzliches Zugriffssteuerungsgerät mit erheblichem Komfortverlust verbunden. In diesem Fall sind die Mittel zur Erfassung der Fingerabdrücke und zum Vergleich mit gespeicherten Mustern vollständig in den Personalcomputer integriert. Für den Zugriffsberechtigungskontrollvorgang wird nach Einschalten des Computers der ausgewählte Finger auf eine gekennzeichnete Fläche F des Bildschirmes gedrückt, worauf der Kontrollvorgang in bekannter Weise ausgeführt wird. Auch hier kann aber die Abtastfläche in eine Taste der Bedieneinheit F', beispielsweise die POWER-ON/OFF-Taste integriert sein und damit Kontroll- und Einschaltvorgang durch das Drücken dieser Taste ausgelöst werden.

Alternativ zur herkömmlichen Bedienung des Personalcomputers ist es gerade bei tragbaren Personalcomputern denkbar, daß bei Erfassung mehrerer Fingerabdrücke beispielsweise nach Art der Funktionstasten jedem der erfaßten Finger eine bestimmte Funktion zugewiesen wird, sodaß mittels Fingerabdruck bestimmte Funktionen des Personalcomputers ausgelöst werden. So könnte beispielsweise die Berührung des Bildschirmes mit dem Ringfinger während einer Textverarbeitungsprozedur einen Speichervorgang auslösen. Auf diese Weise können alle Tasten und damit die gesamte Tastatur eines Personalcomputers durch einzelne Fingerabdrücke oder die Kombination mehrerer Fingerabdrücke ersetzt werden. Die Funktionalität der Finger kann dadurch erhöht werden, daß jeder Fingerabdruck in Verbindung mit einem bestimmten Eingabefeld eine besondere Bedeutung erhält, beispielsweise ein Daumenabdruck der rechten Hand auf zwei unterschiedlichen Eingabefeldern unterschiedliche Funktionen auslöst.

Bei Erfassung der Fingerabdrücke über den Bildschirm des Gerätes und Wegfall der Tastatur kann dieses dann hinsichtlich seiner Größe deutlich reduziert werden. Zur Erleichterung der Handhabung wäre es auch denkbar, die Bedeutung der einzelnen Finger und ihrer Kombinationen auf einem Teilbereich des Bildschirmes dem Benutzer anzuzeigen.

Bei Systemen zur elektronischen Datenverarbeitung mit mehreren Bedieneinheiten, beispielsweise in Hotels mit Bedieneinheiten an der Rezeption, in den Zimmern, in Restaurants, Garagen, Telefonkabinen etc. kann der anfallende Leistungsbezug mit Fingerabdruck quittiert werden. Das System überprüft dann den erfaßten Abdruck mit dem gespeicherten Muster, welches beim Eintreffen an der Rezeption abgenommen wurde und verbucht die Leistungen entsprechend.

## Patentansprüche

1. System zur elektronischen Datenverarbeitung, mit zumindest einer zentralen Steuereinheit, einer Speichereinheit, einer Bedieneinheit und Mittel zur Stromversorgung, wobei die Bedieneinheit Mittel zur Erfassung charakteristischer Merkmale von Personen umfaßt, und wobei Mittel zum Vergleich der erfaßten Merkmale mit gespeicherten Mustern vorgesehen sind,
**dadurch gekennzeichnet, daß**
als charakteristisches Merkmal mehrere Fingerabdrücke der Personen in vorgegebener Reihenfolge erfaßt werden.

2. System nach Anspruch 1,
**dadurch gekennzeichnet, daß**
eine Einrichtung zur Ausgabe von Geldscheinen und/oder Münzen und/oder elektronischen Wertdaten vorgesehen ist.

3. System nach Anspruch 1,
**dadurch gekennzeichnet, daß**
das System als tragbarer Personalcomputer ausgebildet ist.

4. System nach Anspruch 1,
**dadurch gekennzeichnet, daß**
das System in ein Gerät der Konsumelektronik integriert ist.
